# FASCICULE DE BREVET EUROPEEN

(11) **EP 3 328 789 B1**
(45) Date de publication et mention de la délivrance du brevet: **05.05.2021**
(21) Numéro de dépôt: 16753266.2
(22) Date de dépôt: 26.07.2016
(51) Int. Cl.: C01B 32/192, C01B 32/194, C08K 3/04, C01B 32/23

(54) **PROCEDE ET SYSTEME POUR L'ELABORATION DE NANOCOMPOSITES POLYMERES/OXYDE DE GRAPHENE REDUIT PAR REDUCTIONIN SITU**
VERFAHREN UND SYSTEM ZUR HERSTELLUNG VON REDUZIERTEN POLYMER/GRAPHENOXID-NANOKOMPOSITEN MITTELS IN-SITU-REDUKTION VON GRAPHENOXID
METHOD AND SYSTEM FOR PRODUCING POLYMER/GRAPHENE OXIDE NANOCOMPOSITES REDUCED BY IN SITU REDUCTION OF GRAPHENE OXIDE

(30) Priorité: 29.07.2015 FR 1557277
(43) Date de publication de la demande: 06.06.2018
(73) Titulaire: Centre National de la Recherche Scientifique, 75016 Paris (FR)
(72) Inventeur: POULIN, Philippe, 33400 Talence (FR); PADMAJAN SASIKALA, Suchithra, Karunagappally, Kollam, 690573 Kerala (IN); AYMONIER, Cyril, 33130 Bègles (FR)
(74) Mandataire: Novagraaf Technologies
(86) Numéro de dépôt international: PCT/EP2016/067847
(87) Numéro de publication internationale: WO 2017/017117

(56) Documents cités:
- HYE MIN KIM ET AL: "Transparent and high gas barrier films based on poly(vinyl alcohol)/graphene oxide composites", THIN SOLID FILMS, ELSEVIER-SEQUOIA S.A. LAUSANNE, CH, vol. 519, no. 22, 15 juin 2011 (2011-06-15), pages 7766-7771, XP028271756, ISSN: 0040-6090, DOI: 10.1016/J.TSF.2011.06.016 [extrait le 2011-06-15]
- LEISHAN SHAO ET AL: "The effect of the reduction extent on the performance of graphene/poly(vinyl alcohol) composites", JOURNAL OF MATERIALS CHEMISTRY A: MATERIALS FOR ENERGY AND SUSTAINABILITY, vol. 2, no. 34, 28 juin 2014 (2014-06-28), page 14173, XP055267648, GB ISSN: 2050-7488, DOI: 10.1039/C4TA02833C
- LI JINGJING ET AL: "A novel strategy for making poly(vinyl alcohol)/reduced graphite oxide nanocomposites by solvothermal reduction", MATERIALS AND DESIGN, vol. 54, 31 août 2013 (2013-08-31), pages 520-525, XP028774414, ISSN: 0261-3069, DOI: 10.1016/J.MATDES.2013.08.090
- M. TOSELLI ET AL: "In situ thermal reduction of graphene oxide forming epoxy nanocomposites and their dielectric properties", POLYMER COMPOSITES, vol. 36, no. 2, 4 mars 2014 (2014-03-04), pages 294-301, XP055267664, US ISSN: 0272-8397, DOI: 10.1002/pc.22943
- CHANG YI KONG ET AL: "A Green Approach for Highly Reduction of Graphene Oxide by Supercritical Fluid", ADVANCED MATERIALS RESEARCH, vol. 1004-1005, 13 août 2014 (2014-08-13), pages 1013-1016, XP055267709, DOI: 10.4028/www.scientific.net/AMR.1004-1005.1 013
- SIYANG LIU ET AL: "Reduced graphene oxide paper by supercritical ethanol treatment and its electrochemical properties", APPLIED SURFACE SCIENCE, ELSEVIER, AMSTERDAM, NL, vol. 258, no. 13, 6 février 2012 (2012-02-06), pages 5299-5303, XP028466192, ISSN: 0169-4332, DOI: 10.1016/J.APSUSC.2012.02.023 [extrait le 2012-02-13]

## Description

L'invention concerne un procédé permettant notamment l'élaboration de nanocomposites polymères/oxyde de graphène réduit par réduction *in-situ* d'oxyde de graphène, en utilisant des fluides dans des conditions supercritiques et subcritiques. Elle s'applique de manière générale pour la réduction *in situ* d'oxyde de graphène présent dans un composant polymère afin d'obtenir un matériau présentant de bonnes propriétés, notamment de conductivité électrique.

Le graphène est un matériau difficile à intégrer dans des matrices polymères. Une approche couramment employée pour résoudre cette difficulté consiste à oxyder du graphite pour former de l'oxyde de graphène monocouche. L'oxyde de graphène GO contrairement au graphène peut aisément être manipulé et dissout dans divers solvants polaires. Cette dissolution facile de l'oxyde de graphène GO permet de réaliser des nanocomposites de GO sous forme de fibres, de films, d'encres conductrices, d'électrodes, etc. L'oxyde de graphène dans ces structures est dispersé dans une matrice polymère. Ces matériaux ne présentent toutefois pas de propriétés électriques intéressantes car l'oxyde de graphène est un isolant électrique. Ainsi, les composites polymères contenant de l'oxyde de graphène ne sont en général pas utilisés pour des applications qui requièrent une conductivité ou une permittivité élevée. Il convient donc de réduire l'oxyde de graphène pour former de l'oxyde de graphène réduit (rGO) qui présente la propriété d'être conducteur. L'une des méthodes connues pour réduire l'oxyde de graphène dans un nanocomposite consiste à chauffer le nanocomposite. L'efficacité de la réduction est d'autant meilleure que la température de traitement est élevée. Toutefois la température potentiellement applicable est limitée par une dégradation possible de la matrice polymère. En effet, si l'on utilise une température trop élevée, l'oxyde de graphène sera réduit efficacement mais la matrice polymère sera dégradée. Il convient donc de choisir une température modérée, ce qui ne permet généralement pas d'obtenir un matériau présentant de bonnes propriétés électriques. En conséquence la réduction de l'oxyde de graphène est peu efficace et les propriétés électriques et diélectriques du matériau obtenu sont médiocres.

Il est connu d'utiliser des méthodes de réduction « ex-situ » qui comportent une réduction de l'oxyde de graphène avant de réaliser la formation d'un composite avec un polymère. De nombreuses méthodes sont connues pour réduire l'oxyde de graphène. Il existe ainsi des méthodes chimiques basées sur l'utilisation de l'hydrazine, des méthodes électrochimiques, des méthodes thermiques avec des températures élevées et aussi des procédés utilisant l'eau dans des conditions supercritiques (SCW pour supercritical water).

La publication intitulée « Hydrothermal Dehydration for the « Green » Reduction of Exfoliated Graphene Oxide to Graphene and Demonstration of Tunable Optical Limiting Properties » de Yong Zhou and al, chemistry of Materials 2009, 21(13), 2950-2956, divulgue un procédé de déshydratation hydrothermale pour convertir l'oxyde de graphène en une solution d'oxyde de graphène réduit (rGO) stable

La publication "Transparent and high gas barrier films based on poly(vinyl alcohol)/graphene oxide composites", H.M. Kim et al., Thin Solid Films 519 (2011), 7766-7771, décrit la réduction chimique in-situ d'un oxyde de graphène GO au sein d'une matrice polymère de PVA en solution avec de l'hydrazine à 298K pendant 24 heures.

Les méthodes chimiques consistent, par exemple, à employer des agents de réduction dans une solution de particules de latex et de GO afin de réduire l'oxyde de graphène. Le séchage de telles solutions permet d'obtenir un composite polymère-rGO. Une telle méthode requiert cependant une compatibilité entre les agents de réduction et le polymère.

La demande de brevet EP 2678266 décrit un procédé de production de nanocomposites polymères à partir d'une dispersion d'oxyde de graphène dans un latex polyuréthane suivie d'une réduction chimique pour former des feuilles d'oxyde de graphène réduit. Ce traitement est assez lourd puisque le mélange polymère-GO réduit doit être traité de façon à obtenir un matériau composite polymère/rGO.

A l'heure actuelle il existe donc un besoin de disposer d'une méthode efficace de réduction *in situ* de l'oxyde de graphène dans un nanocomposite ayant une matrice polymère.

Dans la suite de la description, on utilise les définitions suivantes : Le domaine supercritique est caractérisé :
- soit par une pression et une température supérieures à la pression et à la température critique du fluide s'il s'agit d'un corps pur,
- soit, pour un mélange de composition fixée de deux ou plusieurs constituants, par une pression et une température supérieures à la pression et à la température du point critique dudit mélange,
Les conditions subcritiques sont caractérisées :
- soit par une pression supérieure à la pression critique et une température inférieure à la température critique du fluide s'il s'agit d'un corps pur,
- soit, pour un mélange de composition fixée de deux ou plusieurs constituants, par une pression supérieure à la pression du point critique du mélange et à une température inférieure à la température du point critique du mélange.

Le procédé selon l'invention repose sur une nouvelle approche qui opère à une température modérée dans des conditions dites de fluides supercritiques ou de fluides subcritiques, pour réaliser la réduction *in-situ* de l'oxyde de graphène.

L'invention concerne un procédé de réduction d'au moins un oxyde de graphène au sein d'un composant composite comprenant au moins une matrice de polymère caractérisé en ce qu'il comporte au moins les étapes suivantes :
a) On introduit un composite constitué d'au moins un polymère et d'oxyde de graphène GO dans un réacteur soumis à une valeur de température T et une valeur de pression P adaptées à mettre un fluide dans des conditions supercritiques ou subcritiques pendant une durée donnée, la température T étant adaptée pour ne pas dégrader le polymère,
b) On refroidit le réacteur et on prélève le produit R obtenu constitué d'au moins une matrice polymère et d'oxyde de graphène réduit rGO,
ledit procédé est caractérisé en ce que :
- l'on utilise comme fluide supercritique ou comme fluide subcritique le dioxyde de carbone, un mélange de dioxyde de carbone et d'hydrogène ou de l'azote pris seul ou mélangé,
- la valeur de température T est comprise dans l'intervalle [100-180°C] et la valeur de pression P est choisie dans l'intervalle [20-25 MPa].

Le composant est par exemple un composite GO-PVA ou un composite GO-PEG. Cette demande décrit aussi le produit obtenu par réduction d'un composant composé d'au moins un oxyde de graphène et d'une matrice de polymère en exécutant les étapes du procédé selon l'invention.

Cette demande décrit aussi un dispositif de réduction d'un composant composite constitué d'un polymère et d'oxyde de graphène caractérisé en ce qu'il comporte au moins les éléments suivants :
- Un réacteur comprenant au moins une entrée d'un fluide, une sortie d'évacuation, une zone de chauffe,
- Un ou plusieurs containers contenant un ou plusieurs fluides choisis pour leur capacité à atteindre un point critique, les fluides étant introduits dans le réacteur au moyen d'un conduit débouchant dans le réacteur et d'une vanne de régulation,
- Un dispositif de mise en température et mise en pression du réacteur contenant le fluide et le composant afin de réaliser les étapes du procédé selon l'invention pour la réduction de l'oxyde de graphène GO au sein d'un composant,
- Un capteur de pression P et de température T adapté à contrôler les conditions de fonctionnement du réacteur.

Le dispositif peut comporter un automate de contrôle de montée en pression et en température du réacteur.

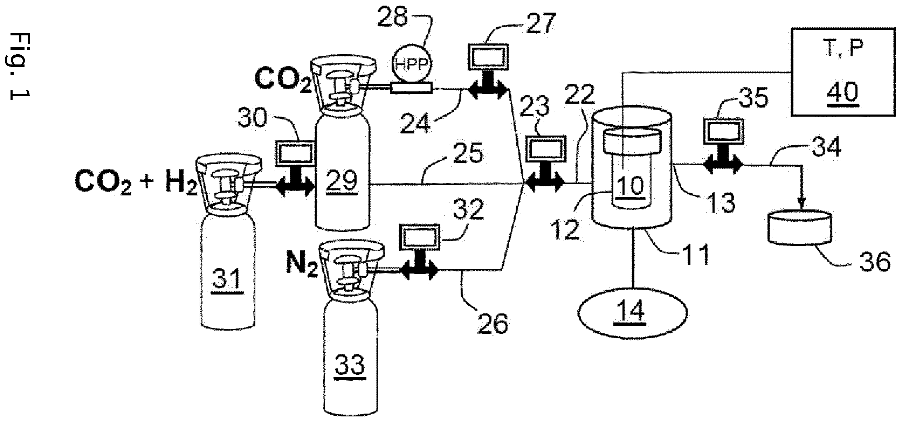

D'autres caractéristiques et avantages de la présente invention apparaîtront mieux à la lecture de la description qui suit d'exemples de réalisation donnés à titre illustratif et nullement limitatif, annexés de la figure unique qui représente un schéma de dispositif pour la mise en œuvre du procédé selon l'invention.

Dans l'exemple donné pour illustrer le procédé selon l'invention, on considère un nanocomposite polymère comprenant de l'oxyde de graphène qui peut être préparé de différentes façons, selon des procédés connus de l'art antérieur. Un exemple de méthode va être donné à titre non limitatif.

Une méthode générale consiste en premier à préparer un nanocomposite polymère avec de l'oxyde de graphène GO que l'on peut transformer facilement. L'oxyde de graphène est obtenu, par exemple, en utilisant la méthode de Hummers connue de l'homme du métier. Le graphite est dans un premier temps oxydé pour produire de l'oxyde de graphite, qui est ensuite exfolié à l'aide d'un solvant. Cette exfoliation conduit à la formation de feuillets monocouches appelés oxyde de graphène. L'oxyde de graphène est ensuite combiné avec un polymère dans des conditions de température se situant au-dessus de la température de fusion du polymère pour un mélangeage dit par voie fondu. Il est aussi possible de le mélanger dans un solvant commun dans lequel l'oxyde de graphène et le polymère sont solubles ou encore dans un solvant dans lequel l'oxyde de graphène GO est soluble et dans lequel le polymère se présente sous la forme de particules de latex. Les nanocomposites finaux sont obtenus, pour la première méthode en refroidissant le mélange, pour les deux dernières méthodes par coagulation ou séchage des suspensions. La coagulation peut être réalisée afin de produire des fibres de nanocomposites au lieu de films, ou de matériaux en masse. La quantité d'oxyde de graphène GO dans le nanocomposite ainsi obtenu peut varier de 0 à 20% massique en utilisant la première méthode, et de 0 à 100 % massique en utilisant les deux autres méthodes. Les nanocomposites ainsi obtenus peuvent être, si nécessaire, traités pour des applications données, telles que: le filage à chaud ou melt spinning, l'extrusion à l'état fondu ou melt extrusion, le soufflage ou blowing, l'impression en trois dimensions ou 3D printing, etc.

Les matériaux ainsi obtenus se présentent sous la forme de films, d'objets 3D, de revêtements « coatings », de fibres, etc. Ce sont ces matériaux qui vont être réduits *in situ* dans des conditions de température T et de pression P avec l'assistance de fluides supercritiques ou de fluides « subcritiques » en exécutant les étapes selon l'invention détaillées ci-après et ceci pendant une durée de traitement fixée.

La figure unique représente un exemple de dispositif permettant de réaliser la réduction *in situ* d'un nanocomposite polymère comprenant de l'oxyde de graphène.

Dans cet exemple, le dispositif 1 comprend un réacteur 10 comprenant une zone de chauffe et de mise sous pression 11, dans lequel on dispose le produit polymère-GO(oxyde de graphène) à réduire, 2, le réacteur a une entrée 12 permettant l'introduction de fluides utilisés pour réduire l'oxyde de graphène et une sortie 13 permettant l'évacuation du produit obtenu R. Un dispositif 14 permet la mise en température de la zone de chauffe du réacteur.

L'entrée 12 est reliée à un conduit 22 comprenant une vanne 23 de contrôle ou régulation du passage des fluides, le conduit 22 se divise dans cet exemple en trois conduits 24, 25 ,26.

Le premier conduit 24 comprend une première vanne 27 de contrôle de passage de fluide, une pompe haute pression 28, et il est en liaison avec un container 29 contenant un premier fluide, par exemple du dioxyde de carbone CO₂.

Le deuxième conduit 25 comportant une deuxième vanne 30 de contrôle de passage de fluide est en liaison avec un deuxième container 31 contenant par exemple un mélange de dioxyde de carbone et d'hydrogène, CO₂+H₂ pressurisé à une pression Pg supérieure à la pression Pr visée dans le réacteur.

Le troisième conduit 26 comportant une troisième vanne 32 est en liaison avec un troisième container 33 comprenant un fluide, de l'azote N₂ pressurisé, par exemple.

Pour le CO₂/H₂ et N₂, on utilise, par exemple, la pression de la bouteille contenant ces éléments pour pressuriser le réacteur. Tous les fluides sont sous pression.

La sortie 13 est reliée à un conduit d'évacuation 34 équipé d'une vanne 35 de contrôle de passage du gaz de réaction qui est par exemple stocké dans un container 36.

Un capteur 40 de mesure de la température T et de la pression P équipe le réacteur. Il est aussi possible d'utiliser des capteurs séparés pour la mesure pression et la mesure de température. Le dispositif selon l'invention peut aussi être relié à une horloge de contrôle de la durée de traitement et/ou à un automate permettant de programmer l'introduction des fluides, leur quantité, leur nature en fonction de la nature du produit de départ (polymère+GO) et les vannes d'introduction et d'évacuation du produit obtenu après la réaction.

Pour la mise en œuvre du procédé, on définit une plage de température [Tₘᵢₙ, Tₘₐₓ] et un intervalle de pression [Pₘᵢₙ, Pₘₐₓ], ainsi qu'une durée de traitement D.

La température minimum de fonctionnement Tₘᵢₙ est définie comme la valeur à laquelle la cinétique de réduction de l'oxyde de graphène est significative. La température maximale Tₘₐₓ sera, par exemple, définie comme la température à partir de laquelle le polymère se dégrade.

La valeur de pression P au sein du réacteur sera choisie afin de se trouver au-dessus du point critique du fluide ou du mélange de fluides utilisé pour la réaction. Il est aussi possible de faire passer le fluide dans un état supercritique ou dans un état subcritique avant de l'introduire dans le réacteur.

La durée de traitement peut varier, par exemple, entre 10 minutes et 24 heures, de préférence entre 30 minutes et 3 heures. Le temps de traitement sera choisi notamment en fonction de la nature des composants.

Le fluide utilisé pour la réaction de réduction in situ peut être du dioxyde de carbone (CO₂, Tc. 31.0 °C, Pc. 7.38 MPa), de l'ammoniac (Tc. 133.0 °C, Pc. 11.4 MPa), ou bien des mélanges de fluide dans des conditions sous ou supercritiques avec des gaz comme l'azote N2, l'argon Ar, l'hydrogène H2 pour lesquels les valeurs des paramètres T et P pour la phase supercritique dépendent de la nature du gaz. Par exemple le point critique du dioxyde de carbone CO₂ est obtenu à Tc. 31.0 °C, Pc. 7.38 MPa et celui de l'ammoniac à Tc. 133.0 °C, Pc. 11.4 MPa.

Le procédé mis en œuvre au sein du dispositif décrit à la figure unique comporte, par exemple les étapes détaillées ci-après.

Au préalable, on prépare un film GO-alcool polyvinylique (PVA) en dispersant de l'oxyde de graphène en suspension dans de l'eau en concentration 4mg/1ml d'eau. On dispose d'une série de composites GO-PVA avec des pourcentages de poids désirés (0,5 à 20 wt% de GO par rapport au PVA) qui ont été obtenus par mélange d'oxyde de graphène et de polymère PVA en solution aqueuse. Le mélange est ensuite « remué » lentement et de manière homogène pendant au moins 5 heures pour obtenir une dispersion homogène. La solution GO-PVA ainsi obtenue est versée dans un récipient et soumis à une étape de séchage pendant 48 heures à une température de 50°C, afin d'obtenir un film GO-PVA. Le film GO-PVA est disposé dans le réacteur de la figure unique dans lequel on introduit un fluide pouvant être porté dans un état supercritique ou subcritique, le réacteur est soumis à une pression et une température choisies pour que le fluide se présente dans un état supercritique, tout en ne dégradant pas le polymère. Par exemple, dans le cas où le fluide est de l'air, de l'azote N₂, du dioxyde de carbone CO₂, un mélange CO₂ + N₂, un mélange CO2+hydrogène H₂, de l'ammoniac, on va porter la température du réacteur à une valeur comprise entre 100 et 180°C et à une pression comprise dans l'intervalle [200 - 250 bars] pendant une heure. La réaction est arrêtée en mettant le réacteur dans un bain d'eau glacé et en ouvrant la valve de sortie du réacteur ce qui permet de récupérer le produit obtenu.

A la place d'un film GO-PVA, il est possible d'appliquer le procédé à des films GO-PEG (polyéthylène glycol) comprenant 20% en poids d'oxyde de graphène. Le film est introduit dans le réacteur et réduit en présence d'un fluide supercritique à une température de l'ordre de 150°C et à une pression comprise entre 20-25 MPa pendant 3 heures. Le fluide supercritique est, par exemple, du dioxyde de carbone ou de l'azote comme il a été indiqué précédemment.

Le taux de charge peut être compris entre 0.001 et 99 wt%.

Les étapes du procédé exposées ci-avant s'appliquent aussi lorsque l'on utilise un fluide présentant des propriétés permettant son passage dans un état subcritique.

Le tableau 1 regroupe un exemple traduisant les effets du traitement selon l'invention sur la valeur de conductivité pour des films GO-PVA et GO-PEG.

**Tableau 1**

| Condition | Description du film | Conductivité,σ, S/m at | | | | | |
|---|---|---|---|---|---|---|---|
| | | Four | Réacteur supercritique (capacité 50 mL) | | | | |
| | | | Air | N₂ | CO₂ | CO₂+H₂ 200 bars | CO₂+N₂ 200 bars |
| 150°C/1 h | GO 10%-PVA | 2.09 | 8.45 | 8.72 | 32.06 | 35.13 | 38.03 |
| 180°C/1 h | | 0.737 | 14.90 | 14.06 | 18.71 | 34.89 | 43.18 |

Le film GO-PVA est composé de GO et de PVA dans les proportions suivantes 10 :100 et 20 :100 en masse. L'efficacité de traitement du procédé de rédaction *in situ* de ces films est mesurée dans différentes conditions supercritiques et thermiques, en présence d'air/ N₂/ CO₂/ CO₂+N₂/ CO₂+H₂, à des températures 150°/200°C et sous des pressions de l'ordre de 20 MPa dans le cas de CO₂/ CO₂+N₂/ CO₂+H₂. Pour effectuer la comparaison, les films ont aussi été réduits par des traitements thermiques classiques sans utilisation de fluides supercritiques. La résistance électrique de ces films a été mesurée par une méthode deux pointes connue de l'homme du métier et la conductivité électrique a été calculée. Les résultats sont donnés au tableau 1. Le tableau 1 montre clairement que le traitement de réduction *in situ* selon l'invention en utilisant les fluides CO₂/ CO₂+N₂/ CO₂+H₂ dans des conditions supercritiques conduit à une augmentation de la conductivité électrique par rapport à un traitement thermique connu de l'art antérieur, et sans détériorer la matrice. Cette conductivité électrique améliorée démontre une réduction plus efficace de la réduction du GO en oxyde de graphène réduit rGO.

Un deuxième tableau 2 regroupe des résultats obtenus en augmentant le temps de traitement par CO₂+N₂. à 150°C et 25 MPa.

**Tableau 2**

| Description du film | Conductivité,σ, S/m at | | | |
|---|---|---|---|---|
| | Durée de traitement | | Réacteur dans des conditions supercritiques avec CO₂+N₂, 150°C/200 bar | |
| | 1 hr | 3 hr | 1 hr | 3 hr |
| GO 20%-PVA | 5.64 | 28.96 | 48.97 | 71.83 |
| GO 20%-PEG | 0.0423 | 0.746 | 7.89 | 29.90 |

Augmenter le temps de traitement a un impact significatif sur l'efficacité de réduction (augmentation de la conductivité électrique) ce qui montre les effets du traitement selon l'invention sur les valeurs de conductivité du produit obtenu pour des films rGO-PVA et rGO-PEG.

Un troisième tableau 3 montre l'effet de traitement en fluide sous critique sur la conductivité de films GO-PVA et GO-PEG, par rapport à une réduction thermique conventionnelle.

**Tableau 3**

| Description des films | Conductivité, σ (S/m) | |
|---|---|---|
| | Réduction thermique conventionnelle à 150 °C pendant 1 heure | Traitement en fluide sous-critique CO₂ en présence de N₂ à 150°C/55.10⁵ Pa bar pendant 1 heure. |
| GO 10%-PVA | 2.64 | 29.15 |
| GO 10%-PEG | 0.024 | 5.84 |

L'invention s'applique notamment pour les composants composites suivants : les nanocomposites conducteurs pour matériaux antistatiques, les nanocomposites conducteurs pour dissipation électromagnétique, l'électronique organique, l'électronique flexible, les encres conductrices, les fibres et les textiles conducteurs, les nanocomposites électrostrictifs pour actionneurs et récupération d'énergie, par exemple. Le composite peut en outre comporter d'autres renforts de nature différente du rGO qui lui confèrent d'autres propriétés.

Le procédé selon l'invention s'applique à tout type de polymères ou de mélanges de polymères présentant la propriété de pouvoir être partiellement gonflé par un fluide mis dans des conditions supercritiques ou subcritiques. Il est ainsi possible d"envisager des polymères thermoplastiques ou thermodurs, organiques.

Dans certains cas, le procédé selon l'invention pourra être utilisé pour des composites céramiques, métalliques.

L'invention offre notamment un procédé de réduction *in-situ* de l'oxyde de graphène plus efficace que les procédés connus de l'art antérieur.

Le procédé est flexible en ce que le choix du (des) fluide(s) et des conditions sous- ou supercritiques permet de traiter n'importe quelle famille de polymères. De plus le procédé ne requiert pas de modifications des méthodes de production des composites puisqu'il s'applique aussi bien à des films, fibres, pièces de forme. On obtient une meilleure réduction de l'oxyde de graphène comparée au traitement conventionnel ce qui se traduit par un gain considérable de conductivité électrique du matériau, tout en conservant la matrice notamment polymère.

Le procédé selon l'invention respecte l'environnement. Il n'utilise pas d'agents chimiques.

## Revendications

1. Procédé de réduction d'au moins un oxyde de graphène *in situ* au sein d'un composant composite comprenant au moins une matrice de polymère **caractérisé en ce qu'**il comporte au moins les étapes suivantes :
a) On introduit un composite constitué d'au moins un polymère et d'oxyde de graphène GO dans un réacteur (10) soumis à une valeur de température T et une valeur de pression P adaptées à mettre un fluide dans des conditions supercritiques ou subcritiques pendant une durée donnée, la température T étant adaptée pour ne pas dégrader le polymère,
b) On refroidit le réacteur (10) et on prélève le produit R obtenu constitué d'au moins une matrice polymère et d'oxyde de graphène réduit rGO,
ledit procédé est **caractérisé en ce que** :
- l'on utilise comme fluide supercritique ou comme fluide subcritique le dioxyde de carbone, un mélange de dioxyde de carbone et d'hydrogène ou de l'azote pris seul ou mélangé,
- la valeur de température T est comprise dans l'intervalle [100-180°C] et la valeur de pression P est choisie dans l'intervalle [20-25 MPa].

2. Procédé selon la revendication précédente **caractérisé en ce que** le composant est un composite GO-PVA.

3. Procédé selon l'une des revendications 1 à 2 **caractérisé en ce que** le composant est un composite GO-PEG.

## Patentansprüche

1. Verfahren zur Reduzierung von mindestens einem Graphenoxid *in situ* innerhalb einer Kompositverbindung, umfassend mindestens eine Polymermatrix, **dadurch gekennzeichnet, dass** es mindestens die folgenden Schritte aufweist:
a) Einleiten eines Komposits, das aus mindestens einem Polymer und Graphenoxid GO besteht, in einen Reaktor (10), der einem Temperaturwert T und einem Druckwert P ausgesetzt wird, die geeignet sind, ein Fluid während einer bestimmten Dauer in superkritische oder subkritische Bedingungen zu versetzen, wobei die Temperatur T geeignet ist, das Polymer nicht zu abzubauen,
b) Abkühlen des Reaktors (10) und Entnehmen des erhaltenen Produkts R, das aus mindestens einer Polymermatrix und reduziertem Graphenoxid rGO besteht,
wobei das Verfahren **dadurch gekennzeichnet ist, dass**:
- als superkritisches Fluid oder als subkritisches Fluid Kohlendioxid, eine Mischung aus Kohlendioxid und Wasserstoff oder Stickstoff, allein herangezogen oder gemischt, verwendet wird,
- der Temperaturwert T im Intervall [100-180 °C] liegt und der Druckwert P aus dem Intervall [20-25 MPa] ausgewählt ist.

2. Verfahren nach vorangehendem Anspruch, **dadurch gekennzeichnet, dass** die Verbindung ein GO-PVA-Komposit ist.

3. Verfahren nach einem der Ansprüche 1 bis 2, **dadurch gekennzeichnet, dass** die Verbindung ein GO-PEG-Komposit ist.

## Claims

1. A method for reducing at least one graphene oxide in situ within a composite component comprising at least one polymer matrix, **characterized in that** it includes at least the following steps:
a) A composite constituted by at least one polymer and graphene oxide GO is introduced into a reactor (10) subjected to a temperature value T and a pressure value P adapted to set a fluid in supercritical or subcritical conditions for a given time period, the temperature T being adapted so as not to degrade the polymer,
b) The reactor (10) is cooled down and the obtained product R constituted by at least one polymer matrix and reduced graphene oxide rGO is retrieved,
said method is **characterized in that**:
- carbon dioxide, a mixture of carbon dioxide and hydrogen or nitrogen, taken alone or in a mixture, is used as a supercritical fluid or as a subcritical fluid,
- the temperature value T is comprised within the interval [100-180°C] and the pressure value P is selected in the interval [20-25 MPa].

2. The method according to the preceding claim, **characterized in that** the component is a GO-PVA composite.

3. The method according to any of claims 1 to 2, **characterized in that** the component is a GO-PEG composite.
